# EUROPEAN PATENT APPLICATION

(11) **EP 2 381 453 A2**
(43) Date of publication of application: **26.10.2011**
(21) Application number: 11161634.8
(22) Date of filing: 08.04.2011
(51) Int. Cl.: H01F 27/40

(54) **Arc flash hazard reduction for transformer secondaries**

(30) Priority: 16.04.2010 US 761587
(71) Applicant: General Electric Company, Schenectady, NY 12345 (US)
(72) Inventor: Sutherland, Peter Edward, Schenectady, NY 12306 (US)
(74) Representative: Bedford, Grant Richard

(57) **Abstract**

Arc flash hazard reduction for transformer secondaries is provided. A current-limiting protection device (225) such as a current-limiting fuse is located between the secondary windings (210) of a transformer (115) and switchgear (130) having a main circuit breaker (235). Placing the current-limiting fuse (225) between the secondary windings (210) of the transformer (115) and switchgear (130) reduces arc flash hazard levels between the transformer (115) and the switchgear (130).

## Description

The present invention relates generally to power distribution systems, and more particularly to reducing arc flash hazard levels between transformer secondaries and switchgear that are utilized in a power sub-station.

An arc flash hazard is a dangerous condition associated with the release of energy caused by an electric arc. Generally, an electric arc is formed when two conductor materials (e.g., copper) separated by a gap are shorted together, causing passage of substantial electric currents through the gap between the conductor materials. An electric arc associated with an arc flash hazard can cause very high temperatures (e.g., up to or beyond 35,000°F) to quickly occur at the conductor materials. These very high temperatures vaporize the conductor materials, creating extremely explosive pressures due to metal vaporization and rapid heating of the air in the gap by electric current passing through it. The vaporization of metal and heating of the surrounding air results in a very rapid blast due to the build-up of high pressures. The blast causes molten metal and equipment parts to violently spew from the point of the blast. People that are nearby arc flash hazards may be subject to severe bums, ruptured eardrums, collapsed lungs and forces that can violently knock them back.

There are several approaches to remediating arc flash hazards. One approach is to use engineering methods to reduce the amount of short circuit current associated with the electric arc, as well as reduce the duration of the arc. Reducing the amount of energy associated with the electric arc and the duration of the arc corresponds to fewer injuries. Another approach to remediating arc flash hazards is to require people working on or near exposed energized conductors to wear personal protective equipment (e.g., heavy jackets, protective hoods, face shields, gloves, etc.) designed specifically for arc flash hazards. A third approach to remediating arc flash hazards involves using procedural or administrative methods to warn people of the potential for the occurrence of arc flash hazards if one is going to work on or be near exposed energized conductors that could experience an electric arc. Procedural or administrative methods may include applying warning labels on or near exposed energized conductors. For example, a typical label could state that if one is going to work on equipment having exposed energized conductors, then workers have to wear authorized personal protective equipment and maintain a predetermined distance from the conductor materials that could be subject to an arc flash hazard.

The above-described approaches to remediating arc flash hazards are not always effective for arc flashes caused by electric arcs having an energy that is greater than 40cal/cm². That is, engineering methods that reduce the amount of energy associated with the electric arc and the duration of the arc may not be available for use with levels greater than 40cal/cm ². Furthermore, currently available personal protective equipment may not provide protection against blasts that can arise from energy levels that are greater than 40cal/cm². Similarly, the hazards associated with blasts that can arise from energy levels that are greater than 40cal/cm² essentially make the use of warning labels ineffectual for their intended purposes. Because the above-described approaches to remediating arc flash hazards are not suitable for arc flashes caused by electric arcs having an energy that is greater than 40cal/cm² workers need to shut down the equipment and work on it while deenergized. Shutting down equipment and working on it while deenergized is not always an optimal solution, especially in facilitates where it is desirable to keep equipment operating 24 hours, seven days a week.

In one aspect of the present invention, a system is provided. The system comprises a transformer having at least one primary winding and at least one secondary winding. Switchgear having a main circuit breaker is coupled to the transformer via the at least one secondary winding. At least one current-limiting protection device is located between the transformer and the switchgear. The at least one current-limiting protection device couples to the at least one secondary winding of the transformer. The at least one current-limiting protection device reduces arc flash hazard levels between the at least one secondary winding of the transformer and the switchgear.

In another aspect of the present invention, an arc flash hazard reduction system is provided. In this aspect of the present invention, the arc flash hazard reduction system comprises a transformer having at least one primary winding and at least one secondary winding. Switchgear having a main circuit breaker is coupled to the transformer via the at least one secondary winding. At least one current-limiting fuse is located between the transformer and the switchgear, wherein the at least one current-limiting fuse couples to the at least one secondary winding of the transformer. The at least one current-limiting fuse reduces arc flash hazard levels between the at least one secondary winding of the transformer and the switchgear.

In a third aspect of the present invention, a power sub-station is provided. In this aspect of the present invention, the power sub-station comprises a primary switch receiving an incoming voltage supply. A transformer has at least one primary winding and at least one secondary winding, wherein the at least one primary winding of the transformer couples to the primary switch. Switchgear having a main circuit breaker is coupled to the transformer via the at least one secondary winding. At least one current-limiting fuse is located between the transformer and the switchgear, wherein the at least one current-limiting fuse couples to the at least one secondary winding of the transformer. The at least one current-limiting fuse reduces arc flash hazard levels between the at least one secondary winding of the transformer and the switchgear.

Various aspects and embodiments of the present invention will now be described in connection with the accompanying drawings, in which:
FIG. 1 is a schematic diagram of a low-voltage power sub-station;
FIG. 2 is a schematic diagram of an arc flash hazard reduction system that is suitable for use in the low-voltage power sub-station depicted in FIG. 1 according to one embodiment of the present invention; and
FIGS. 3-4 show the mechanical layout for one phase of the transformer depicted in FIG. 2 according to one embodiment of the present invention.

Various embodiments of the present invention are directed to an arc flash hazard reduction system for use in a power sub-station. In these embodiments, current-limiting protection devices such as current-limiting protection fuses (e.g., a high speed, high current fuse) are placed between a transformer and switchgear having a main circuit breaker, such that the current-limiting protection devices are coupled to the secondary windings of the transformer. Placing the current-limiting protection devices between the secondary windings of the transformer and the switchgear provides arc flash hazard reduction capability in a region of a power substation that is designated as an "Extreme Danger" area because it can have incident energy levels that are greater than about 40 cal/cm². Technical effects of various embodiments of the present invention include providing arc flash hazard reduction in regions of a power sub-station that can have incident energy levels that are greater than about 40 cal/cm². This enables workers to perform maintenance on such areas without having to shut down and deenergize equipment. Performing maintenance on Extreme Danger regions without having to shut down and deenergize equipment results in increased productivity of the power sub-station.

In the various embodiments of the present invention as described herein, the arc flash hazard reduction system is suitable for use in a power sub-station such as a low-voltage power sub-station. Although the various embodiments of the present invention are described with respect to reducing arc flash hazard reduction levels in a low-voltage power sub-station, the embodiments of the present invention are not limited to use solely with these types of sub-stations. Those skilled in the art will recognize that the various embodiments of the present invention can be used in other power sub-stations such as medium-voltage and high-voltage sub-stations. In addition, the various embodiments of the present invention are not limited to power sub-stations. The various embodiments of the present invention may have utility in other parts of power distribution systems where it is desirable to reduce arc flash hazard reduction levels.

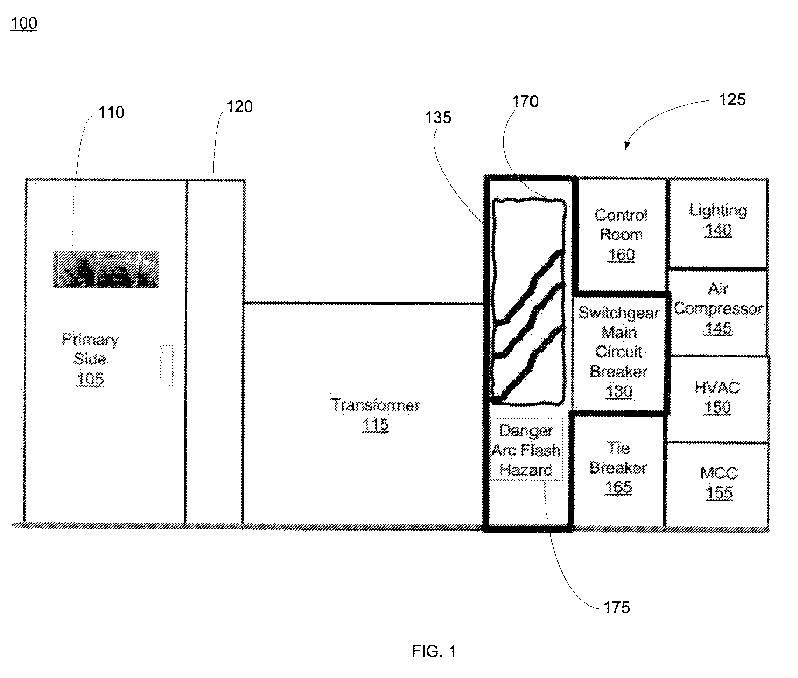

Referring to the drawings, FIG. 1 is a schematic diagram of a low-voltage power sub-station 100. As shown in FIG. 1, power sub-station 100 comprises a primary side 105 that receives incoming lines from a voltage source (not shown). In particular, primary side 105 includes a primary switch 110 (e.g., a three-knife switch) that receives incoming cables that supply voltage. In one embodiment, primary switch 110 receives 13.8 kilo volts (kV) from the source. For sake of simplicity in illustrating a low-voltage power sub-station, those skilled in the art will recognize that not all features and functionalities associated with primary side 105 are illustrated in FIG.1. For example, those skilled in the art will appreciate that primary side 105 could have fuses, insulators, lightning arrestors, etc.

A transformer 115 having at least one primary winding (not shown in FIG. 1) and at least one secondary winding (not shown in FIG. 1) is coupled to primary side 105. A transition compartment 120 located between primary side 105 and transformer 115 contains conductors, bus bars or cables (not shown in FIG. 1) that connect the primary winding(s) (not shown in FIG. 1) of transformer 115 to conductors, bus bars or cables (not shown in FIG. 1) associated with primary side 105. Transformer 115 receives the voltage supplied from primary side 105 and reduces it to a lower voltage and provides it to a secondary side 125. As shown in FIG. 1, secondary side 125 includes switchgear having a main circuit breaker 130 via transition compartment 135. Transition compartment 135 contains conductors, bus bars or cables (not shown in FIG. 1) that connect the secondary winding(s) (not shown in FIG. 1) of transformer 115 to conductors, bus bars or cables (not shown in FIG. 1) associated with switchgear 130. In one embodiment, transformer 115 reduces 13.8 kV provided from primary side 105 to 480V and transfers it to switchgear 130 via transition compartment 135.

Under normal operating conditions the main circuit breaker in switchgear 130 is closed so that the power supply received from transformer 115 is distributed to one of a variety of loads. If the main circuit breaker in switchgear 130 determines that there is a short circuit current flowing in the switchgear then it opens up to interrupt the short circuit current. As shown in FIG. 1, the loads that receive power supplied from switchgear 130 include a lighting load 140, an air compressor load 145, a heat/ventilating/air-conditioning (HVAC) load 150 and a motor control center (MCC) load 155. Although not shown in FIG. 1, each of these loads will have their own internal circuit breaker that can interrupt short circuit flowing in these loads. Those skilled in the art will recognize that lighting load 140, air compressor load 145, heat/ventilating/air-conditioning (HVAC) load 150 and motor control center (MCC) load 155 are only examples of possible loads and that power sub-station 100 can have additional loads or even fewer loads than shown in FIG. 1.

FIG. 1 shows that secondary side 125 of power sub-station 100 further includes a control room 160 and a tie breaker 165. In one embodiment, control room 160 has meters that provide an indication of voltage and current in various parts of the equipment forming power sub-station 100. In addition, control room 160 may have the capability to perform remote monitoring and diagnostics of power-substation 100. Those skilled in the art will recognize that these are only a few examples of functionalities that can be performed in control room 160 and is not meant to cover all possible functions. Tie breaker 165 provides a connection to another sub-station in case a back-up is needed. For example, if some type of fault arises in power substation 100 and it prevents the supply of power to lighting load 140, air compressor load 145, heat/ventilatinglair-conditioning load (HVAC) 150 and motor control center (MCC) load 155, then tie breaker 165 could be closed so that power from the back-up sub-station (not shown in FIG. 1) could be supplied to the loads. Those skilled in the art will recognize that secondary side 125 can have additional components attached thereto and that control room 160 and tie breaker 165 are only a couple of examples of components that can be part of a secondary side of a power sub-station.

As shown by an arc flash hazard symbol 170 in FIG. 1, transition compartment 135 and switchgear 130 are regions within power sub-station 100 that may have incident energies greater than about 40cal/cm² that cannot be remediated by personal protective equipment and a label 175 that warns of the extreme dangers associated with these types of arc flash hazards. As noted above, primary side 105 would have fuses located between primary switch 110 and the primary winding(s) (not shown in FIG. 1) of transformer 115 to protect against high voltages, but these fuses are neither fast enough nor sensitive enough to protect against arc flash hazards that could arise between the secondary winding(s) (not shown in FIG. 1) of transformer 115 and transition compartment 135 and switchgear 130.

Various embodiments of the present invention have addressed arc flash hazards that can arise between the secondary windings (not shown in FIG. 1) of transformer 115 and transition compartment 135 and switchgear 130 by placing current-limiting protection devices such as current-limiting protection fuses (e.g., a high speed, high current fuse) between the secondary windings of the transformer and the conductor coupling transformer 115 to transition compartment 135 and switchgear 130. Placement of current-limiting protection devices in this location provides the capability to reduce arc flash hazards that can arise in the region including transition compartment 135 and switchgear 130 and that can have incident energy levels that are greater than about 40 cal/cm². As mentioned above, current-limiting protection devices (e.g., fuses) have been used on the primary side 105 between primary switch 110 and the primary winding(s) of transformer 115 to protect against high voltages, but these devices are neither fast enough nor sensitive enough to protect against arc flash hazards that could arise between the secondary winding(s) of transformer 115 and transition compartment 135 and switchgear 130.

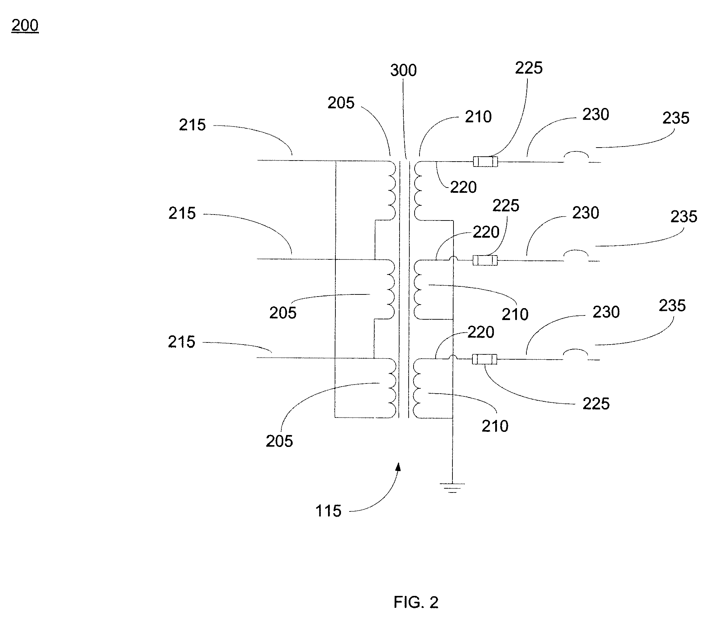

FIG. 2 is a schematic circuit diagram of an arc flash hazard reduction system 200 showing the details of the current-limiting protection devices in relation to transformer 115 (FIG. 1) and transition compartment 135 (FIG. 1) and switchgear 130 (FIG. 1). As shown in FIG. 2, transformer 115 includes primary windings 205 and secondary windings 210 placed about a core 300. In this embodiment, transformer 115 is a three-phase system having three legs (i.e., three pairs of primary and secondary windings all on the same core). Those skilled in the art will recognize that other types of transformers could be used as well as other three-phase transformers that have more than three legs (e.g., five legs). Transformer primary conductors 215 couple primary windings 205 of transformer 115 to primary switch 110 (FIG. 1) of primary side 105 (FIG. 1). Transformer secondary conductors 220 couple secondary windings 210 of transformer 115 to current-limiting protection devices 225. Conductors 230 couple current-limiting protection devices 225 to a main circuit breaker 235 located in switchgear 130 (FIG. 1) via transition component 135 (FIG. 1).

In one embodiment, current-limiting protection devices 225 comprise a current-limiting fuse. One example of a current-limiting fuse that is suitable for use in the various embodiments of the present invention is any commercially available high speed, high current fuse. Square body fuses such as a FU170M6621 fuse (550V, 2000A, Clearing I²t=6.35x10⁶ A² sec) sold by Cooper Bussman is one example of a commercially available high speed, high current fuse that may be used with various embodiments of the present invention. Those skilled in the art will recognize that there are other commercially available high speed, high current fuses of comparable size, rating (e.g., 800A, 1200A, 1600A and 2400A) and clearing that may be used as a current-limiting protection device in various embodiments of the present invention.

The various embodiments of the present invention are not limited to using current-limiting fuses. Those skilled in the art will recognize that other current-limiting protection devices may be suitable for use with the various embodiments of the present invention. For example, current-limiting circuit breakers, "Is limiters" or "CLIP" devices may be used, as long as they can provide the necessary degree of current limitation.

As shown in FIG. 2, current-limiting protection devices 225 are coupled directly on secondary windings 210 of transformer 115 via transformer secondary conductors 220. Minimizing transformer secondary conductors 220 so that current-limiting protection devices 225 are located at a predetermined minimal distance to secondary windings 210, minimizes the amount of exposed area that is susceptible to the high levels of incident energy that creates the arc flash hazards. In one embodiment, a predetermined minimal distance between current-limiting protection devices 225 and secondary windings 210 is less than about 10 centimeters (cm). In another embodiment, a predetermined minimal distance between current-limiting protection devices 225 and secondary windings 210 may be in the range of about 5 cm to about 10 cm. Those skilled in the art will recognize that this predetermined minimal distance is only an example and that other amounts are within the scope of the various embodiments of the present invention.

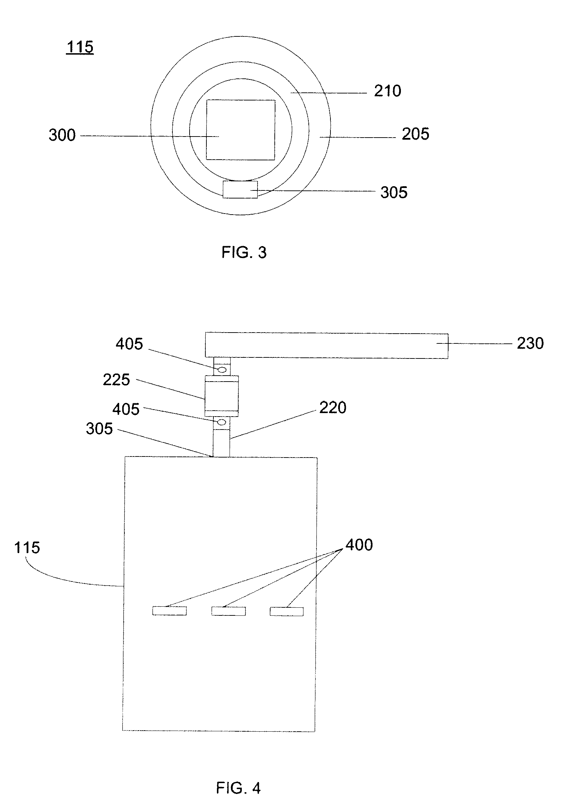

FIGS. 3-4 show the mechanical layout of the arrangement depicted in FIG. 2 for one phase of transformer 115 according to one embodiment of the present invention. In particular, FIG. 3 shows a top view of transformer 115, while FIG. 4 shows a side view of transformer 115 with transformer secondary conductor 220 coupling current-limiting protection device 225 and conductor 230 coupling current-limiting protection device 225 to switchgear (not shown in FIG. 4). For ease of illustration, FIGS. 3 and 4 show only one phase (i.e., only one primary winding and secondary winding) of the three-phase system. Those skilled in the art will recognize that other phases of the three-phase system would be similar to that shown in FIGS. 3 and 4.

As shown in FIG. 3, transformer 115 includes core 300 surrounded concentrically by secondary winding 210 which is surrounded concentrically by primary winding 205. A secondary terminal 305 is attached to secondary winding 210 which couples to transformer secondary conductor 220 (FIG. 4), which couples to current-limiting protection device 225 (FIG. 4). In one embodiment, core 300 is an iron core with high magnetic permeability, primary winding 205 and secondary winding 210 may be aluminum coils that may be either multi-conductor barrel or sheet conductor types, while secondary terminal 305 may be made of a copper material.

FIG. 4 shows that transformer 115 further includes winding taps 400 that may be used to adjust the voltage output generated from the transformer. Winding taps 400 could be used to receive cables that adjust the voltage by selecting the number of turns used in the primary winding, thus changing the transformer turns ratio.

FIG. 4 shows transformer secondary conductor 220 coupling current-limiting protection device 225 to transformer 115 via secondary terminal 305. In addition, FIG. 4 shows conductor 230 coupled to current-limiting protection device 225 at an end that is opposite where the device couples to transformer 115 via transformer secondary conductor 220 and secondary terminal 305. In one embodiment, both transformer secondary conductor 220 and conductor 230 may be made of a copper rectangular rigid bar that facilitates coupling with current-limiting protection device 225. As shown in FIG. 4, transformer secondary conductor 220 and conductor 230 have mounting holes 405 to respectively secure current-limiting protection device 225. Mounting holes 405 are configured to receive fasteners such as bolts, lugs, etc., that secure transformer secondary conductor 220 and conductor 230 to current-limiting protection device 225. FIG. 4 also shows current-limiting protection device 225 mounted vertically with respect to transformer secondary conductor 220 and conductor 230, however, those skilled in the art will recognize that the device could be mounted horizontally with respect to these conductors.

The configurations illustrated in FIGS. 1-4 are able to reduce arc flash hazard levels that may occur between the secondary windings 210 of the transformer 115 and the switchgear 130 including transition compartment 135 because current-limiting protection device 225 interrupts the fault current with the first loop of overcurrent, prior to the first current zero. Those skilled in the art will recognize that current-limiting protection device 225 should be properly selected to provide an energy let-through that is small enough to allow less than about 40 cal/cm² of incident energy at the working distance. Because arc flash hazard levels are reduced at regions of a power sub-station that can have incident energy levels that are greater than about 40 cal/cm², workers can safely use personal protective equipment to perform maintenance in a prescribed manner (i.e., according to safety level mandates) while compartments are still energized.

While the disclosure has been particularly shown and described in conjunction with a preferred embodiment thereof, it will be appreciated that variations and modifications will occur to those skilled in the art. Therefore, it is to be understood that the appended claims are intended to cover all such modifications and changes as fall within the true spirit of the disclosure.

Various aspects and embodiments of the present invention are defined by the following numbered clauses:
1. A system, comprising:
   a transformer having at least one primary winding and at least one secondary winding;
   switchgear having a main circuit breaker coupled to the transformer via the at least one secondary winding; and
   at least one current-limiting protection device located between the transformer and the switchgear, wherein the at least one current-limiting protection device couples to the at least one secondary winding of the transformer, the at least one current-limiting protection device reducing arc flash hazard levels between the at least one secondary winding of the transformer and the switchgear.
2. The system according to clause 1, wherein the at least one current-limiting protection device comprises a high speed, high current fuse.
3. The system according to any preceding clause, further comprising a transformer secondary conductor coupling one end of the at least one current-limiting protection device to the at least one secondary winding of the transformer.
4. The system according to any preceding clause, further comprising a conductor coupling the at least one current-limiting protection device to the main circuit breaker of the switchgear, wherein the conductor couples to the at least one current-limiting protection device at an end opposite that couples the at least one current-limiting protection device to the at least one secondary winding of the transformer.
5. The system according to any preceding clause, wherein the transformer secondary conductor and the conductor each comprise a mounting hole to facilitate fastening with the at least one current-limiting protection device.
6. The system according to any preceding clause, wherein the at least one current-limiting protection device couples to the at least one secondary winding of the transformer at a predetermined minimal distance.
7. The system according to any preceding clause, further comprising a plurality of loads coupled to the switchgear.
8. An arc flash hazard reduction system, comprising:
   a transformer having at least one primary winding and at least one secondary winding;
   switchgear having a main circuit breaker coupled to the transformer via the at least one secondary winding; and
   at least one current-limiting fuse located between the transformer and the switchgear, wherein the at least one current-limiting fuse couples to the at least one secondary winding of the transformer, the at least one current-limiting fuse reducing arc flash hazard levels between the at least one secondary winding of the transformer and the switchgear.
9. The arc flash hazard reduction system according to any preceding clause, wherein the at least one current-limiting fuse comprises a high speed, high current fuse.
10. The arc flash hazard reduction system according to any preceding clause, further comprising a transformer secondary conductor coupling one end of the at least one current-limiting fuse to the at least one secondary winding of the transformer.
11. The arc flash hazard reduction system according to any preceding clause, further comprising a conductor coupling the at least one current-limiting fuse to the main circuit breaker of the switchgear, wherein the conductor couples to the at least one current-limiting fuse at an end opposite that couples the at least one current-limiting fuse to the at least one secondary winding of the transformer.
12. The arc flash hazard reduction system according to any preceding clause, wherein the at least one current-limiting protection device reduces arc flash hazards having incident energy levels that are greater than about 40 cal/cm².
13. A power sub-station, comprising:
   a primary switch receiving an incoming voltage supply;
   a transformer having at least one primary winding and at least one secondary winding, wherein the at least one primary winding of the transformer couples to the primary switch;
   switchgear having a main circuit breaker coupled to the transformer via the at least one secondary winding; and
   at least one current-limiting fuse located between the transformer and the switchgear, wherein the at least one current-limiting fuse couples to the at least one secondary winding of the transformer, the at least one current-limiting fuse reducing arc flash hazard levels between the at least one secondary winding of the transformer and the switchgear.
14. The power sub-station according to any preceding clause, wherein the at least one current-limiting fuse comprises a high speed, high current fuse.
15. The power sub-station according to any preceding clause, comprising a first transition compartment having a transformer primary conductor coupling one end of the primary switch to the at least one primary winding of the transformer, wherein the transformer primary conductor couples to the primary switch at an end opposite the end that receives the incoming voltage supply.
16. The power sub-station according to any preceding clause, further comprising a second transition compartment having a transformer secondary conductor coupling one end of the at least one current-limiting fuse to the at least one secondary winding of the transformer.
17. The power sub-station according to any preceding clause, wherein the second transition compartment further comprises a conductor coupling the at least one current-limiting fuse to the main circuit breaker of the switchgear, wherein the conductor couples to the at least one current-limiting fuse at an end opposite that couples the at least one current-limiting fuse to the at least one secondary winding of the transformer.
18. The power sub-station according to any preceding clause, wherein the transformer secondary conductor and the conductor each comprise a mounting hole to facilitate fastening with the at least one current-limiting fuse.
19. The power sub-station according to any preceding clause, wherein the at least one current-limiting fuse couples to the at least one secondary winding of the transformer at a predetermined minimal distance.
20. The power sub-station according to any preceding clause, further comprising a plurality of loads coupled to the switchgear.

## Claims

1. A system, comprising:
a transformer (115) having at least one primary winding (205) and at least one secondary winding (210);
switchgear (130) having a main circuit breaker (235) coupled to the transformer (115) via the at least one secondary winding (210); and
at least one current-limiting protection device (225) located between the transformer (115) and the switchgear (130), wherein the at least one current-limiting protection device (225) couples to the at least one secondary winding (210) of the transformer (115), the at least one current-limiting protection device (115) reducing arc flash hazard levels between the at least one secondary winding (210) of the transformer (115) and the switchgear (130).

2. The system according to claim 1, wherein the at least one current-limiting protection device (225) comprises a high speed, high current fuse.

3. The system according to any preceding claim, further comprising a transformer secondary conductor (220) coupling one end of the at least one current-limiting protection device (225) to the at least one secondary winding (210) of the transformer (115).

4. The system according to any preceding claim, further comprising a conductor (230) coupling the at least one current-limiting protection device (225) to the main circuit breaker (235) of the switchgear (130), wherein the conductor (230) couples to the at least one current-limiting protection device (225) at an end opposite that couples the at least one current-limiting protection device (225) to the at least one secondary winding (210) of the transformer (115).

5. The system according to claim 4, wherein the transformer secondary conductor (220) and the conductor (230) each comprise a mounting hole (405) to facilitate fastening with the at least one current-limiting protection device (225).

6. The system according to any preceding claim, wherein the at least one current-limiting protection device (225) couples to the at least one secondary winding (210) of the transformer (115) at a predetermined minimal distance.

7. An arc flash hazard reduction system, comprising:
a transformer (115) having at least one primary winding (205) and at least one secondary winding (210);
switchgear (130) having a main circuit breaker (235) coupled to the transformer (115) via the at least one secondary winding (210); and
at least one current-limiting fuse (225) located between the transformer (115) and the switchgear (130), wherein the at least one current-limiting fuse (225) couples to the at least one secondary winding (210) of the transformer (115), the at least one current-limiting fuse (225) reducing arc flash hazard levels between the at least one secondary winding (210) of the transformer (115) and the switchgear (130).

8. The arc flash hazard reduction system according to claim 7, wherein the at least one current-limiting protection device (225) reduces arc flash hazards having incident energy levels that are greater than about 40 cal/cm².

9. A power sub-station (100), comprising:
a primary switch (110) receiving an incoming voltage supply;
a transformer (115) having at least one primary winding (205) and at least one secondary winding (220), wherein the at least one primary winding (205) of the transformer (115) couples to the primary switch (110);
switchgear (130) having a main circuit breaker (235) coupled to the transformer (115) via the at least one secondary winding (210); and
at least one current-limiting fuse (225) located between the transformer (115) and the switchgear (130), wherein the at least one current-limiting fuse (225) couples to the at least one secondary winding (210) of the transformer (115), the at least one current-limiting fuse (225) reducing arc flash hazard levels between the at least one secondary winding (210) of the transformer (115) and the switchgear (130).

10. The power sub-station (100) according to claim 9, further comprising a plurality of loads (140, 145, 150, 155) coupled to the switchgear (130).
